(19) Europäisches Patentamt
European Patent Office
Office européen des brevets

(11) EP 0 581 621 B2

(12) NOUVEAU FASCICULE DE BREVET EUROPEEN

(45) Date de publication et mention de la décision concernant l'opposition:
**13.11.2002 Bulletin 2002/46**

(45) Mention de la délivrance du brevet:
**06.12.1995 Bulletin 1995/49**

(21) Numéro de dépôt: **93401439.0**

(22) Date de dépôt: **07.06.1993**

(51) Int Cl.$^7$: **C09K 11/81**, H01J 61/44, C01B 25/45

(54) **Nouveaux luminophores verts à base de phosphate mixte de lanthane, cerium et terbium, précurseurs de ceux-ci et procédés de synthèse**

Neue grüne Lanthan-Terbium und Ceriumphosphat-Gemischsleuchtstoffe, Vorläufer davon und Verfahren zur Herstellung

New green mixed lanthanum, terbium and cerium phosphate phosphors, their precursors and processes for their preparation

(84) Etats contractants désignés:
**AT BE CH DE DK ES FR GB GR IE IT LI LU MC NL PT SE**

(30) Priorité: **29.07.1992 FR 9209355**

(43) Date de publication de la demande:
**02.02.1994 Bulletin 1994/05**

(73) Titulaire: **RHONE-POULENC CHIMIE**
**92408 Courbevoie Cédex (FR)**

(72) Inventeur: **Braconnier, Jean-Pierre**
**F-17140 Lagord (FR)**

(74) Mandataire: **Dubruc, Philippe et al**
**Rhodia Services,**
**Direction de la Propriété Industrielle,**
**40, rue de la Haie-Coq**
**93306 Aubervilliers Cedex (FR)**

(56) Documents cités:
EP-A- 0 456 937       EP-A- 0 456 938
EP-A- 0 498 689       EP-A- 0 524 034
WO-A-82/04438        DE-A- 2 729 105
DE-A- 3 326 921       DE-A- 3 348 146
US-A- 3 507 804       US-A- 4 447 756
US-A- 5 091 110

• **J. Electrochem.Soc.: Solid Date Science, vol. 118, N0. 9, September 1971, pp. 1508-1510, M. Hoffman:"Effect of Thorium on Ce+3 Phosphors"**
• **Technisch-wissenschaftliche Abhandlungen der Osram-Gesellschaft, Vol. 12, Springer Verlag 1986, F. Zwaschka "Stabilisierung des Leuchtstoffes Lanthanphosphat (Ce,Tb) durch grosse Kationen (Th,U), pp. 470-474**
• **NICHIA CHEMICAL INDUSTRIES LTD.: Fiche technique NP-220, février 1983,"Lamp Phosphor".**
• **K. Butler "Fluorescent Lamp Phosphors, Technology and Theory", Pennsylvania State University Press, 1980, pp. 26, 82**
• **TASCHENBUCH DER MATHEMATIK von I.N BRONSTEIN und K.A. SEMENDJAJEW, pages 146-147; Verlag HARRI DEUTSCH, ZÜRICH und FRANKFURT/M.; 1967.**

Remarques:
Le dossier contient des informations techniques présentées postérieurement au dépôt de la demande et ne figurant pas dans le présent fascicule.

**Description**

La présente invention concerne de nouveaux luminophores verts à base de phosphates mixtes de lanthane, de cérium et de terbium, éventuellement additivés, présentant une granulométrie, ainsi qu'une brillance, améliorées.

Elle concerne également, à titre de produits industriels intermédiaires nouveaux et utiles, les phosphates mixtes de lanthane, de cérium et de terbium qui, selon la présente invention, sont plus particulièrement destinés à être utilisés comme précurseurs pour la fabrication des nouveaux luminophores verts ci-dessus.

Elle concerne enfin des procédés de synthèse visant notamment à la préparation tant desdits luminophores que de leurs précurseurs.

On sait déja que les phosphates mixtes de terres rares, et notamment de lanthane, cérium et terbium, présentent des propriétés de luminescence intéressantes.

Ainsi, il a été développé depuis le début des années soixante-dix de nombreux phosphates mixtes de lanthane, de cérium et de terbium (appelés également plus couramment "phosphates de LaCeTb") avec différentes concentrations en lanthane, cérium et terbium, ces produits pouvant par ailleurs être éventuellement additivés par certains éléments dopants (Li, Na, K, Th, B,...) dans le but de promouvoir et/ou renforcer encore leur potentiel de luminescence. Des luminophores à base de tels produits sont déjà utilisés à l'échelle industrielle, par exemple dans le domaine des lampes à mercure basse pression.

De nombreux procédés visant à la préparation des phosphates de LaCeTb ont été décrits dans la littérature. Les voies d'accès proposées peuvent, globalement, être classées en deux grandes catégories principales : (i) les procédés dits par "voie sèche" et (ii) les procédés dits par "voie humide".

Les procédés par voie sèche, qui sont notamment décrits dans les brevets JP 62007785, WO 8204438, JP 62089790, JP 59179578 et JP 62000579, consistent à former un mélange entre des oxydes des différentes terres rares, ou à prendre un oxyde mixte desdites terres rares, et à réaliser une phosphatation de ce mélange ou de cet oxyde mixte par calcination en présence de phosphate diammonique. Compte tenu du fait que le rendement de la phosphatation doit être proche de 100% pour obtenir un luminophore qui soit le plus pur possible, et donc présente une efficacité maximale d'émission, ces procédés requièrent de nombreuses précautions et des traitements relativement longs.

Les procédés par voie humide, tels que ceux illustrés notamment par les brevets JP 57023674, JP 60090287 et JP 62218477, consistent quant à eux à réaliser une synthèse directe, en milieu liquide, d'un phosphate mixte des terres rares ou d'un mélange de phosphates de terres rares, et ceci généralement par attaque d'un composé solide contenant les terres rares (carbonate et/ou oxyde) au moyen d'une solution d'acide phosphorique pour précipiter les phosphates correspondants. Toutefois, il est également possible de réaliser la précipitation directe du phosphate à partir d'une solution de sels solubles de terres rares. Ainsi, dans le brevet américain US 3507804, on a décrit un procédé de fabrication de phosphate double de lanthane et terbium consistant à précipiter du phosphate à partir d'une solution de nitrates de ces éléments et addition d'acide phosphorique; toutefois, entre autres problèmes, le ou les phosphates obtenus sont très difficiles à filtrer. En outre, dans la demande de brevet français déposée sous le n° 91 01215 et au nom de la Demanderesse, on a décrit un procédé de synthèse d'un phosphate mixte de terres rares consistant à mélanger une solution de sels solubles de lanthane, cérium et terbium avec des ions phosphates, et ceci avec un contrôle du pH du milieu de précipitation qui est maintenu à une valeur constante supérieure à 2, puis à laisser mûrir le précipité ainsi obtenu; bien que ce procédé permette, entre autres avantages, d'obvier de manière satisfaisante aux problèmes de filtration que l'on rencontre dans les voies classiques mettant en oeuvre une précipitation directe (obtention de gels ou de précipités se filtrant très mal), il conduit néanmoins à des produits dont la répartition granulométrique peut apparaître comme encore insuffisante, puisque l'indice de dispersion des particules constituant tant le précurseur phosphate mixte que le luminophore résultant, est supérieur à 0,5.

Tous les différents procédés ci-dessus, qu'ils reposent sur une voie sèche ou une voie humide, ont pour inconvénient commun majeur de conduire à des phosphates mixtes de lanthane, cérium et terbium présentant une granulométrie non controlée, en particulier une distribution granulométrique non resserrée ou, du moins, insuffisamment resserrée. Or, l'obtention de particules monodisperses à granulométrie uniforme et resserrée, constitue une caractéristique importante et recherchée pour la fabrication ultérieure de luminophores performants, c'est à dire de luminophores d'une part faciles à mettre en oeuvre dans les lampes (revêtements en fines couches homogènes) et d'autre part présentant des propriétés de luminescence, notamment de brillance, optimales. En d'autres termes, et plus simplement, il a été constaté que la qualité du précurseur de départ conditionne de manière essentielle et décisive la qualité du luminophore final.

Par ailleurs, un autre problème réside dans le fait que les phosphates mixtes connus à ce jour nécessitent, pour leur transformation en luminophores, des traitements thermiques à hautes températures, réalisés aux environ de 1200°C sous flux et sous atmosphère réductrice. Cette dernière exigence trouve sa raison d'être dans la nécessité de ramener et/ou de maintenir les deux espèces cérium et terbium à leur état d'oxydation 3+ pour que le phosphate de LaCeTb résultant soit effectivement un luminophore vert. Ces traitements, outre le fait d'être longs, coûteux et délicats à mettre en oeuvre, induisent encore des perturbations dans la granulométrie, elle-même déja imparfaite, du précuseur de départ et conduisent ainsi à des particules de luminophores non homogènes en tailles, pouvant en outre contenir des quantités plus ou moins importantes d'impuretés liées notamment à l'emploi du flux, et présentant finalement des performances en luminescence, et en particulier en brillance, insuffisantes pour les applications désirées.

La présente invention vise à remédier aux problèmes ci-dessus. Plus précisémment encore, les, buts poursuivis par la présente invention, qui peuvent être pris seuls ou en combinaison, résident notamment dans la mise à disposition :

- de phosphates mixtes de LaCeTb qui présentent une granulométrie, et plus particulièrement une répartition granulométrique, améliorée,
- de phosphates mixtes de LaCeTb qui peuvent conduire, par des traitements thermiques ne nécessitant l'emploi ni de flux et/ou d'atmosphère réductrice, à des luminophores verts,
- de phosphates mixtes de LaCeTb qui permettent l'obtention de luminophores verts à propriétés, notamment de granulométrie et brillance, améliorées,
- de luminophores à base de phosphates mixtes de LaCeTb qui présentent une granulométrie, et plus particulièrement une répartition granulométrique, améliorée,
- de luminophores à base de phosphates mixtes de LaCeTb qui présentent des performances en luminescence, et en particulier en brillance, améliorées,
- de procédés de synthèse qui permettent d'accéder de manière simple, économique, reproductible et controlée, aux différents produits ci-dessus.

A cet effet, on a maintenant trouvé, et il s'agit là d'un des premiers objets de la présente invention, que ces buts, et d'autres, pouvaient être atteints au moyen d'un nouveau procédé de préparation de phosphates mixtes de lanthane, cérium et terbium, ce procédé étant caractérisé par le fait qu'il consiste à introduire, en continu et sous agitation, une première solution de sels solubles de lanthane, cérium et terbium, dans une seconde solution contenant des ions phosphates et présentant un pH initial inférieur à 2, à contrôler au cours de la précipitation le pH du milieu de précipitation à une valeur sensiblement constante et inférieure à 2, puis à récupérer le précipité ainsi obtenu et enfin, éventuellement, à le traiter thermiquement.

On peut ainsi obtenir des phosphates mixtes de lanthane, cérium et terbium, précurseur de luminophores verts de formule générale : $La_x\ Ce_y\ Tb_{(1-x-y)}$ $PO_4$, $zH_2O$ dans laquelle x est compris, inclusivement, entre 0,4 et 0,6, x+y est supérieur à 0,8 et z est compris, inclusivement, entre 0 et 2, lesdits phosphates présentant une taille moyenne de particules comprise entre 1 et 15 microns et un indice de dispersion (granulométrie laser type Cilas) inférieur à 0,5, ces phosphates présentent en outre après calcination à une température comprise entre 700°C et 900°C sous air, une clarté L* supérieure à 98% et des coordonnées de couleur a* et b* comprises entre -0,5 et + 0,5, cette clarté et ces coordonnées étant mesurées selon la norme AFNOR X08-012.

L'invention concerne aussi des phosphates mixte de lanthane, cérium et terbium, précurseur de luminophores verts, ayant pour formule générale :

$$La_x\ Cey\ Tb_{(1-x-y)}\ PO4,\ z\ H_2O$$

dans laquelle x est inclusivement compris entre 0,4 et 0,6, x+y est supérieur à 0,8 et z est inclusivement compris entre 0 et 2, caractérisés en ce que les particules les constituant présentent une taille moyenne comprise entre 1 et 15 microns avec un indice de dispersion inférieur à 0,5 (granulométrie laser type Cilas) et en ce qu'après calcination à une température comprise entre 700°C et 900°C sous air, ils présentent par analyse de surface X.P.S., deux doublets dans la gamme d'énergie correspondant aux électrons 3 d du cérium et une absence de satellite situé à 32,7 eV du premier pic.

De tels produits constituent un second objet de la présente invention.

En outre, ces phosphates mixtes peuvent être ultimement transformés en luminophores verts, et ceci au moyen de traitements thermiques appropriés réalisés avec ou sans flux, sous ou sans atmosphère réductrice selon les cas, ces luminophores étant caractérisés par le fait qu'ils ont conservé l'excellente distribution granulométrique des phosphates mixtes de départ, à savoir qu'ils présentent eux-aussi une taille moyenne de particules comprise entre 1 et 15 microns et un indice de dispersion inférieur à 0,5. Par ailleurs, ces luminophores possèdent une brillance améliorée, voire exceptionnelle (brillance appréciée selon une mesure du rendement de conversion telle que définie dans la suite de la description).

Ces luminophores verts à base d'un phosphate mixte de lanthane, cérium et terbium, de formule générale:

$$La_x\ Ce_y\ Tb_{(1-x-y)}\ PO4$$

dans laquelle x est compris, inclusivement, entre 0,4 et 0,6 et x+y est supérieur à 0,8, sont caractérisés en ce que les particules les constituant présentent une taille moyenne comprise entre 1 et 15 microns avec un indice de dispersion inférieur à 0,5 (granulométrie laser type Cilas) et consistent chacune en un monocristal simple, de forme polyédrique.

Ces luminophores constituent un troisième objet de la présente invention.

Mais d'autres caractéristiques, aspects et avantages de l'invention apparaîtront encore plus clairement à la lecture de la description détaillée qui va suivre.

Pour des raisons liées à la clarté de l'exposé, on commencera par développer le procédé de synthèse des nouveaux phosphates mixtes de LaCeTb selon l'invention, ces derniers étant eux-mêmes décrits plus en détails par la suite.

Selon l'invention, on réalise une précipitation directe et à pH contrôlé d'un phosphate mixte de lanthane, cérium et terbium, et ceci en faisant réagir une première solution de sels solubles de lanthane, cérium et terbium contenant ces éléments dans les proportions stoechiométriques requises pour l'obtention du produit de formule désirée, avec une deuxième solution contenant des ions phosphates.

Selon une première caractéristique importante du procédé selon l'invention, un certain ordre d'introduction des réactifs doit être respecté, et, plus précisément encore, la solution de sels solubles de terres rares doit être introduite, progressivement et en continu, dans la solution contenant les ions phosphates.

Selon une deuxième caractéristique importante du procédé selon l'invention, le pH initial de la solution contenant les ions phosphates doit être inférieur à 2, et de préférence compris entre 1 et 2.

Selon une troisième caractéristique importante du procédé selon l'invention, le pH du milieu de précipitation doit ensuite être contrôlé à une valeur de pH inférieure à 2, et de préférence comprise entre 1 et 2.

Par "pH contrôlé", on entend un maintien du pH du milieu de précipitation à une certaine valeur, constante ou sensiblement constante, par addition de composés basiques ou de solutions tampons, dans la solution contenant les ions phosphates, et ceci simultanément à l'introduction dans cette dernière de la solution contenant les sels solubles de terres rares. Le pH du milieu variera ainsi d'au plus 0,5 unité de pH autour de la valeur de consigne fixée, et de préférence encore d'au plus 0,1 unité de pH autour de cette valeur. La valeur de consigne fixée correspondra avantageusement au pH initial (inférieur à 2) de la solution contenant les ions phosphates.

Dans la présente invention, ce contrôle du pH est avantageusement réalisé par addition d'un composé basique comme cela sera expliqué ci-dessous.

La précipitation est réalisée de préférence en milieu aqueux à une température qui n'est pas critique et qui est comprise, avantageusement, entre la température ambiante (15°C - 25°C) et 100°C. Cette précipitation a lieu sous agitation du milieu de réaction.

Les concentrations des sels de terres rares dans la première solution peuvent varier dans de larges limites. Ainsi, la concentration totale en terres rares peut être comprise entre 0,01 mol/litre et 3 mol/litre.

Les sels de terres rares convenables pour l'invention sont notamment les sels solubles en milieu aqueux, comme par exemple les nitrates, chlorures, acétates, carboxylates, ou un mélange de ceux-ci. Les sels préférés selon l'invention sont les nitrates.

On notera que la solution de sels de lanthane, cérium et terbium peut comprendre en outre d'autres sels métalliques, comme par exemple des sels d'autres terres rares, d'éléments alcalins, de thorium, de bore et autres, pour obtenir des phosphates de LaCeTb dopés avec d'autres éléments, comme cela est déja connu de l'état de l'art.

Les ions phosphates destinés à réagir avec la solution des sels de terres rares peuvent être apportés par des composés purs ou en solution, comme par exemple l'acide phosphorique, les phosphates d'alcalins ou d'autres éléments métalliques donnant avec les anions associés aux terres rares un composé soluble.

Selon un mode préféré de réalisation de l'invention, les ions phosphates sont ajoutés sous forme de phosphates d'ammonium car le cation ammonium se décomposera lors de la calcination ultérieure permettant ainsi d'obtenir un phosphate mixte de grande pureté. Parmi les phosphates d'ammonium, le phosphate diammonique ou monoammonique sont les composés préférés pour la mise en oeuvre de l'invention.

Les ions phosphates sont présents en quantité telle que l'on obtienne un rapport molaire $PO_4/TR$ supérieur à 1, et avantageusement compris entre 1,1 et 3.

Comme souligné ci-avant dans la description, la solution contenant les ions phosphates doit présenter initialement (c'est à dire avant le début de l'introduction de la solution de sels de terres rares) un pH inférieur à 2, et de préférence compris entre 1 et 2. Aussi, si la solution utilisée ne présente pas naturellement un tel pH, ce dernier est amené à la valeur convenable désirée soit par ajout d'une base (par exemple de l'ammoniaque, dans le cas d'une solution initiale d'acide phosphorique) soit par ajout d'un acide (par exemple de l'acide nitrique, dans le cas d'une solution initiale de phosphate diammonique).

Par la suite, au cours de l'introduction de la solution contenant les sels de terres rares, le pH du milieu de précipitation diminue progressivement; aussi, selon l'une des caractéristiques essentielles du procédé selon l'invention, dans le but de maintenir le pH du milieu de précipitation à la valeur constante de travail désirée, laquelle doit être inférieure à 2 et de préférence comprise entre 1 et 2, on introduit simultanément dans ce milieu une base.

Comme composé basique convenable pour l'invention, on peut citer, à titre d'exemples, les hydroxydes métalliques ($NaOH$, $KOH$, $CaOH_2$,....) ou l'hydroxyde d'ammonium, ou tout autre composé basique dont les espèces le constituant ne formeront aucun précipité lors de leur addition dans le milieu réactionnel, par combinaison avec une des espèces par ailleurs contenues dans ce milieu, et permettant un contrôle du pH du milieu de précipitation.

Selon un mode préféré de réalisation de l'invention, ce composé basique est avantageusement un composé facilement éliminable soit avec la phase liquide du milieu réactionnel et lavage du précipité, soit par décomposition thermique lors de la calcination du phosphate mixte.

Ainsi, le composé basique préféré de l'invention est l'ammoniac, mis en oeuvre avantageusement sous forme de solution aqueuse.

A l'issue de l'étape de précipitation, on obtient directement un phosphate mixte de LaCeTb, éventuellement additivé par d'autres éléments. La concentration globale en terres rares dans le milieu final de précipitation, est alors avantageusement supérieure à 0,25 mol/litre. Le précipité de phosphate peut être récupéré par tout moyen connu en soi, en particulier par simple filtration. En effet, dans les conditions du procédé selon l'invention, on précipite un phosphate de LaCeTb non gélatineux et aisément filtrable. Le produit récupéré peut ensuite être lavé, par exemple avec de l'eau, dans le but de le débarasser des éventuelles impuretés, notamment des groupements nitrates et/ou ammoniums adsorbés. Il peut enfin être traité thermiquement, et ceci sous diverses conditions choisies essentiellement en fonction du degré de transformation désiré pour le produit final (nature de la phase cristalline, degré d'hydratation, pureté, niveau de luminescence et autre), comme cela sera expliqué plus en détails dans ce qui suit. Avec ou sans mise en oeuvre de traitements thermiques ultérieurs, on notera que le procédé selon l'invention conduit toujours à des produits présentant une granulométrie fine et extrêmement resserrée.

De nouveaux phosphates mixtes de lanthane, cérium et terbium, tels que ceux susceptibles d'être obtenus selon le procédé ci-desus, constituent un second objet de la présente invention et vont donc maintenant être décrits plus en détails.

Les phosphates mixtes de lanthane, cérium et terbium conformes à l'invention répondent à la formule générale :

$$La_x\, Ce_y\, Tb_{(1-x-y)}\, PO_4\, ,\, zH2O$$

dans laquelle x est compris inclusivement entre 0,4 et 0,6, x+y est supérieur à 0,8 et z est compris inclusivement entre 0 et 2, et ils se caractérisent par le fait que les particules les constituant présentent une taille moyenne comprise entre 1 et 15 microns, de préférence entre 2 et 6 microns, et ceci avec un indice de dispersion inférieur à 0,5, de préférence inférieur à 0,4.

Les particules présentent une distribution en taille à la fois monodisperse et extrêmement resserrée autour de la valeur moyenne, résultat jamais atteint à ce jour pour ce type de produit.

Le diamètre moyen des particules est mesuré au moyen d'un granulomètre laser type CILAS (CILAS HR 850).

L'indice de dispersion 1 est quant à lui déterminé par la formule :

$$I = \frac{\varnothing_{84} - \varnothing_{16}}{2\varnothing_{50}}$$

dans laquelle :

- $\varnothing_{84}$ est le diamètre des particules pour lequel 84% des particules ont un diamètre inférieur à $\varnothing_{84}$,
- $\varnothing_{16}$ est le diamètre des particules pour lequel 16% des particules ont un diamètre inférieur à $\varnothing_{16}$,
- et $\varnothing_{50}$ est le diamètre moyen des particules.

Ces orthophosphates de LaCeTb peuvent se présenter sous une forme cristalline de type soit hexagonale soit monoclinique, et ceci essentiellement en fonction de la température "vue" par les produits au cours de leur préparation.

Ainsi, plus précisemment, la forme hexagonale correspond aux phosphates mixtes soit n'ayant subi aucun traitement thermique ultérieur (par exemple un produit brut de précipitation) soit ayant subi un traitement thermique mais à une température n'excédant généralement pas 600°C, et la forme monoclinique correspond aux phosphates mixtes qui sont obtenus après un traitement thermique poussé et opéré à une température au moins supérieure à 600 ° C, avantageusement comprise entre 700 et 1000°C, dans le but de procéder à la transformation de la phase cristalline hexagonale en une phase pure monoclinique.

Un produit non traité thermiquement est généralement hydraté; toutefois, de simples séchages, opérés par exemple entre 60 et 100°C, suffisent à éliminer la majeure partie de cette eau résiduelle et à conduire à des phosphates de LaCeTb substantiellement anhydre, les quantités mineures d'eau restante étant quant à elles éliminées par des calcinations conduites à des températures supérieures à 400 ° C environ.

Par ailleurs, les phosphates mixtes selon l'invention présentent, de manière remarquable, des concentrations en cérium IV et en terbium IV très faibles, même après calcination à une température élevée sous air.

Cette faible proportion en ces deux espèces peut être démontrée par un test de colorimétrie consistant à déterminer les coordonnées caractéristiques de la couleur du corps dans le système CIE 1976 (L*, a*, b*) tel que défini par la Commission Internationale d'Eclairage, et répertorié dans le Recueil de Normes Françaises (AFNOR) couleur colorimétrique n° X08-012 (1983). Ces coordonnées sont déterminées au moyen d'un colorimètre commercialisé par la Société Pacific Scientific.

Ainsi, les phosphates de LaCeTb de l'invention présentent après calcination à 700 ° C sous air, une clarté, représentée par la coordonnée L*, supérieure à 98% et avantageusement comprise entre 99 et 99,99%.

Cette coordonnée L* permet de mesurer la couleur blanche du produit qui est elle-même directement reliée à la présence d'espèces colorées dans le produit telles que du cérium et/ou du terbium à l'état d'oxydation 4+.

Les produits de l'invention présentent également des coordonnées de couleur a* et b* comprises entre - 0,5 et +0,5 environ, de préférence entre -0,25 et +0,50.

Ces valeurs excellentes de clarté L*, a*, b* sont obtenues également pour des températures de calcination comprises entre 700 et 900°C. Ceci montre une exceptionnelle stabilité du composé de l'invention en atmosphère non réductrice.

Il est également possible d'apprécier la présence ou l'absence du cérium et/ou du terbium à l'état d'oxydation 4+ par une analyse de surface des produits par la technique dite X.P.S. et qui est notamment décrite dans la publication PRALINE et Coll., Journal of Electron Spectroscopy and Related Phenomena, 21 (1981), pp. 17-30 et 31-46.

On montre ainsi que les produits selon l'invention présentent, dans la gamme d'énergie correspondant aux électrons 3d du cérium, deux doublets caractéristiques de l'état d'oxydation 3+ et l'absence de satellite, situé à 32,7 eV du premier pic, caractéristique d'un degré d'oxydation 4+.

Les phosphates mixtes selon l'invention présentent donc des atomes de cérium et de terbium stabilisés à l'état d'oxydation 3+, permettant d'utiliser lors de la calcination une atmosphère quelconque, c'est à dire une atmosphère réductrice ou non réductrice, et en particulier oxydante comme de l'air. Le produit calciné obtenu contiendra du cérium et du terbium à l'état d'oxydation 3+, le cérium et le terbium à l'état d'oxydation 4+ n'étant présents qu'à l'état de traces, ou totalement absents. En outre, comme le cérium et le terbium se trouvent à l'état 3+, les phosphates mixtes de l'invention permettront d'obtenir des luminophores verts, à propriétés de luminescence élevées.

Selon les températures auxquelles ils ont été calcinés, les phosphates mixtes selon l'invention peuvent contenir des quantités résiduelles d'ions ammonium plus ou moins importantes. Ainsi, avant calcination ou après calcination à une température inférieure à 500°C, ils contiennent généralement au plus 5% en poids d'ions ammonium, et de préférence au plus 2% en poids. Dans tous les cas, ces ions ammonium peuvent être éliminés par décomposition thermique ou évaporation, au cours de calcinations opérées à plus hautes températures, en particulier au delà de 600 ° C.

De même, les phosphates mixtes de l'invention présentent des surfaces spécifiques variables selon les températures de calcination auxquelles ils ont été portés, celles-ci décroissant régulièrement avec ces dernières. Ainsi, à titre d'exemple, après traitement thermique à une température inférieure à 600 °C, ils présentent une surface spécifique supérieure ou égale à 30 m2/g; après calcination à 800°C, cette surface est de l'ordre d'une dizaine de m2/g environ, et après calcination à 900-1000°C, elle chute à des valeurs généralement inférieures à environ 5 m2/g.

Dans ce qui précède, la surface spécifique est mesurée par la méthode B.E.T. qui est déterminée par adsorption d'azote conformément à la norme ASTM D3663-78 établie à partir de la méthode BRUNAUER-EMMETT-TELLER décrite dans le périodique "The Journal of the American Society", 60,309 (1938).

Les phosphates mixtes de l'invention présentent en outre la propriété particulièrement remarquable et intéressante de ne pas motter lors de la calcination, c'est à dire que les particules les constituant ne sont pas, ou n'ont pas tendance à être, agglomérées et donc à se retrouver sous une forme finale de gros granules de taille de 0,1 à plusieurs mm par exemple; il n'est donc pas nécessaire de procéder à un broyage préalable des poudres avant de conduire sur celles-ci les traitements classiques destinés à l'obtention du luminophore final.

Enfin, comme indiqué ci-avant dans la description, les phosphates mixtes de LaCeTb selon l'invention peuvent également comprendre d'autres éléments jouant classiquement un rôle notamment de promoteur des propriétés de luminescence ou de stabilisateur des degrés d'oxydation des éléments cérium et terbium; à titre d'exemples, on peut citer plus particulièrement les alcalins (Li, Na, K, ...), le thorium et le bore.

Bien que les phosphates mixtes de lanthane, cérium et terbium selon l'invention présentent, après avoir subi un traitement thermique à une température généralement supérieure à 600°C, et avantageusement comprise entre 700 et 1000°C, des propriétés de luminescence aux longueurs d'onde voisine de 550 nm (c'est à dire dans le vert) après exposition à un rayon de longueur d'onde de 254 nm, il est possible et même nécessaire d'améliorer encore ces propriétés de luminescence en procédant sur les produits à des post-traitements, et ceci afin d'obtenir un véritable luminophore directement utilisable en tant que tel dans l'application souhaitée. Ces luminophores constituent un autre objet de la présente invention.

On comprendra que la frontière entre un phosphate de LaCeTb selon l'invention et un luminophore selon l'invention reste, somme toute, assez arbitraire, et dépend du seul seuil de luminescence à partir duquel on considère qu'un produit peut être directement mis en oeuvre de manière acceptable par un utilisateur.

Dans le cas présent, on a considéré et identifié comme précurseurs de luminophores les phosphates de LaCeTb selon l'invention qui n'ont pas été soumis à des traitement thermiques supérieurs à environ 1000°C, car de tels produits présentent généralement des rendements de conversion (tels qu'explicités ci-après) inférieurs à 60%, et ont en conséquence été jugés par la Demanderesse comme des produits ne satisfaisant pas au critère minimum de brillance des luminophores commerciaux susceptibles d'être utilisés directement, sans aucune transformation ultérieure. A l'inverse, on qualifie selon la présente invention de luminophores, les phosphates mixtes de lanthane, cérium et terbium qui, après avoir été soumis à des traitements appropriés, développent des rendements de conversion convenables, c'est à dire d'au moins 60%.

Selon la présente invention, en soumettant les phosphates mixtes de LaCeTb de l'invention tels que décrits en détails ci-avant, à des traitements thermiques particuliers, on obtient des luminophores verts à base de phosphates de LaCeTb présentant d'une part une granulométrie, et en particulier une répartition granulométrique, améliorée et, d'autre part, une brillance exceptionnelle.

Selon une première variante du procédé de préparation de ces nouveaux luminophores verts à base de phosphates mixtes de lanthane, cérium et terbium, on soumet les phosphates mixtes de lanthane, cérium et terbium de l'invention (précurseurs) à un traitement thermique sous "flux". On notera qu'un tel traitement est en lui-même déjà bien connu en soi et est classiquement utilisé dans les procédés d'élaboration des principaux luminophores, notamment pour adapter ces derniers à l'application souhaitée (morphologie des particules, état de surface, brillance, par exemple).

A titre de flux convenables, on peut notamment citer le fluorure de lithium, le chlorure de lithium, le chlorure de potassium, le chlorure d'ammonium, l'oxyde de bore et les phosphates d'ammonium. cette liste n'étant bien entendu nullement limitative. Le flux est mélangé au phosphate mixte à traiter, puis le mélange est porté à une température supérieure à 1000°C, généralement comprise entre 1000°C et 1200°C, et ceci sous une atmosphère nécessairement réductrice. Après traitement, le produit est lavé puis rincé, de manière à obtenir un luminophore le plus pur possible et dans un état désaggloméré.

Selon une deuxième variante du procédé selon l'invention, on traite simplement thermiquement les phosphates mixtes de LaCeTb de l'invention, et ceci en l'absence de tout flux, à une température supérieure à 1000°C, généralement comprise entre1000 et 1200°C. Cette seconde variante est préférée car, dans ce cas, outre le fait que l'emploi d'un flux est évité, il a été trouvé que la calcination pouvait être indifféremment conduite sous atmosphère réductrice ou non réductrice, en particulier sous atmosphère oxydante comme par exemple de l'air. Ce dernier point constitue un avantage particulièrement intéressant pour un procédé de fabrication de luminophores verts à base de phosphates de LaCeTb, les procédés classiques de l'art antérieur nécessitant toujours des atmosphères réductrices, et donc coûteuses. Bien entendu, il est tout à fait possible, bien que moins économique, de mettre également en oeuvre, toujours dans le cadre de cette seconde variante, des atmosphères réductrices (hydrogène par exemple) ou neutres (argon par exemple), ou des mélanges de celles-ci.

Que l'une ou l'autre des voies ci-dessus aient été utilisées, on obtient toujours finalement un luminophore à base de phosphate de LaCeTb, de structure cristalline de type monoclinique, présentant une taille moyenne de particules comprise entre 1 et 15 microns, de préférence entre 2 et 6 microns, et ceci avec un indice de dispersion très faible, inférieur à 0,5, de préférence inférieur à 0,4.

La taille moyenne et l'indice de dispersion des particules sont déterminés selon les méthodes indiquées ci-avant.

Si le luminophore a été obtenu selon une voie dite sous flux, on constate que chacune des particules constituant le produit ci-dessus consiste en fait en un monocristal simple, de forme généralement polyédrique.

Dans le cas contraire, ces particules apparaissent de forme sphéroidale et sont constituées d'une agrégation de petites cristallites, dont la taille moyenne peut varier entre 100 nm et 300 nm.

Comme indiqué ci-avant dans la description, les nouveaux luminophores selon l'invention présentent en luminescence une brillance exceptionnelle. Cette brillance a été appréhendée de manière rigoureuse au moyen d'une mesure, exprimée par rapport à un étalon fixé, du rendement de conversion du luminophore.

Le rendement de conversion est la comparaison entre le nombre de photons émis par un luminophore et le nombre de photons qui constitue le faisceau d'excitation.

L'évaluation du rendement de conversion consiste à mesurer dans la gamme visible du spectre électromagnétique l'émission d'un luminophore sous une excitation monochromatique de longueur d'onde de 254 nm. La valeur de brillance obtenue (intensité d'émission intégrée entre 380 et 780 nm) est alors comparée avec celle d'un luminophore de référence, à savoir $Zn_2SiO_4$ dopé Mn qui est disponible auprès du National Bureau of Standart sous la référence NBS 1028, et dont le rendement connu est de 65%.

Les luminophores selon l'invention peuvent ainsi présenter un rendement de conversion supérieur ou égal à 70%, valeur tout à fait remarquable et jamais atteinte, à la connaissance de la Demanderesse, pour ce type de produits. Dans ce cas, on notera que la teneur molaire en terbium dans le luminophore est généralement d'au moins 13% (x + y < 0,87).

Il a en outre été noté, pour les luminophores obtenus selon une voie sous flux, une excellente stabilité dans le temps de leurs propriétés de brillance, lesquelles se maintiennent à des valeurs nettement améliorées par rapport aux luminophores à base de phosphate mixte de LaCeTb de l'art antérieur. Cette stabilité peut être appréciée au moyen de tests de veillissement classiques (simulation du comportement en lampe), et plus connus dans le domaine des luminophores sous le terme de test de "baking". Ce test consiste à calciner, pendant 10 mn à 600°C et sous air, une couche mince de luminophore déposée avec un liant classique sur un support inerte (verre), et à mesurer le nouveau rendement de conversion du luminophore ainsi traité. Pour les luminophores selon l'invention, la chute du rendement de conversion n'excède pas 1 % en valeur relative.

Enfin, comme déja souligné ci-avant dans la description, les nouveaux luminophores selon l'invention peuvent bien entendu en outre contenir divers éléments dopants, tels que des alcalins (Li, Na, K, ...), du thorium ou du bore.

Des exemples concrets, destinés à illustrer l'invention dans ces divers aspects, vont maintenant être donnés, et ceci à titre indicatif et nullement limitatif.

Exemple 1

Dans 500 ml d'une solution d'acide phosphorique $H_3PO_4$, préalablement amenés à pH 1,4 par addition d'ammoniaque et portés à 60°C, sont ajoutés en une heure 500 ml d'une solution de nitrates de terres rares de concentration globale 1,5 mol/l et se décomposant comme suit : 0,825 mol/l de $La(NO_3)_3$; 0,45 mol/l de $Ce(NO_3)_3$ et 0,225 mol/l de $Tb(NO_3)_3$.
Le rapport molaire phosphate/terres rares est de 1,15. Le pH au cours de la précipitation est régulé à 1,4 par addition d'ammoniaque.
A l'issue de l'étape de précipitation, le milieu réactionnel est encore maintenu une heure à 60 ° C.

Le précipité est ensuite aisément récupéré par filtration, lavé à l'eau puis séché à 60°C sous air. Le produit se présente alors sous la forme d'une poudre blanche (aspect d'un talc) constituée de particules (agglomérats) de 3 à 6 microns formées d'agrégats compacts d'environ 250 nm formés eux-mêmes par l'agrégation de cristallites élémentaires de taille comprise entre 30 et 150 nm. La poudre est ensuite soumise à un traitement thermique à 900°C sous air. L'analyse aux rayons X montre que le produit est un orthophosphate de LaCeTb de structure cristalline monoclinique. Il est constitué de grains compacts d'environ 250 nm agglomérés sous forme de particules sphériques de taille comprise entre 3 et 6 microns. La granulométrie CILAS, mesurée après désagglomération sommaire sous ultra-sons, donne un $Ø_{50}$ de 4,5 microns avec une répartition très resserrée puisque l'indice de dispersion est de seulement 0,4.

Exemple 2

Dans une solution de phosphate monoammonique acidifiée à pH 1,5 par addition d'acide nitrique et portée à 60°C, est ajoutée en une heure une solution de nitrates de terres rares de concentration globale 2,5 mol/l et contenant ces éléments dans une proportion molaire dentique à celle de l'exemple 1. Le apport molaire phosphate/terres rares est de 1,1 et le pH au cours de la précipitation est régulé à 1,5 par addition d'une solution d'ammoniaque. A l'issue de l'étape de précipitation, le milieu réactionnel est encore maintenu une heure à 60 ° C.

Le précipité est ensuite aisément récupéré par filtration, puis lavé à l'eau. Il se présente sous la forme d'une poudre blanche (aspect d'un talc) correspondant à un phosphate de LaCeTb hydraté de structure cristalline hexagonale. Sa teneur en matière volatiles est d'environ 30% en poids.

Le précipité est soumis à un traitement thermique à 900°C sous air. Cette calcination conduit à une fine poudre parfaitement blanche de composition correspondant à un orthophosphate de LaCeTb, avec une structure cristalline monoclinique, et constituée d'agglomérats de 3 à 6 microns. La granulométrie CILAS, mesurée après désagglomération sommaire du produit sous ultra-sons, donne un $Ø_{50}$ de 6 microns avec une répartition très ressérrée puisque l'indice de dispersion est seulement de 0,4.

Exemple 3

La poudre de phosphate mixte de LaCeTb issue de l'exemple 2 a été transformée en luminophore par un procédé de calcination sous flux.
Pour ce faire, 1% en poids de LiF sont d'abord ajoutés à cette poudre, puis l'ensemble est mélangé dans un mélangeur type TURBULA pour homogénéisation, et le mélange résultant introduit dans un creuset fermé en alumine ultrapure. La calcination, qui est réalisée pendant deux heures à 1000°C et sous un balayage d'argon hydrogéné (1% d'hydrogène) est ensuite suivie d'un lavage désagglomérant avec une solution d'acide nitrique 15% à 80 °C, puis d'un rinçage à l'eau et séchage.

On obtient ainsi un luminophore vert dont les caractéristiques granulométriques (CILAS) sont les suivantes :

- $Ø_{50}$ : 7,7 microns
- indice de dispersion I : 0,45

Le rendement de conversion de ce luminophore (mesuré par rapport à l'étalon $Zn_2SiO_4$ dopé Mn, de rendement égal à 65%) est supérieur à 70%.

Exemple 4

La poudre issue de l'exemple 2 est cette fois transformée en luminophore sans employer de flux. Cette poudre est placée dans le même creuset que celui de l'exemple 3, puis est calcinée deux heures à 1100°C sous argon hydrogéné (1%).

On obtient un luminophore dont les caractéristiques sont les suivantes :

- $Ø_{50}$ : 6,2 microns
- indice de dispersion : 0,4
- rendement de conversion : supérieur à 70%.

## Exemple 5

On reproduit l'exemple 4, mais en mettant en oeuvre une calcination sous air. Les caractéristiques du luminophore obtenu sont identiques à celles du luminophore de l'exemple 4.

## Revendications

1. Un luminophore vert à base d'un phosphate mixte de lanthane, cérium et terbium, de formule générale:

$$La_x Ce_y Tb_{(1-x-y)} PO4$$

dans laquelle x est compris, inclusivement, entre 0,4 et 0,6 et x+y est supérieur à 0,8, **caractérisé en ce que** les particules le constituant présentent une taille moyenne comprise entre 1 et 15 microns avec un indice de dispersion inférieur à 0,5 (granulométrie laser type Cilas) et consistent chacune en un monocristal simple, de forme polyédrique.

2. Luminophore selon la revendication 1, **caractérisé en ce que** ladite taille moyenne est comprise entre 2 et 6 microns.

3. Luminophore selon l'une des revendications 1 à 2, **caractérisé en ce que** l'indice de dispersion est inférieur à 0,4.

4. Luminophore selon l'une des revendications 1 à 3, **caractérisé en ce qu'**il présente un rendement de conversion supérieur à 50%.

5. Luminophore selon la revendication 4, **caractérisé en ce que** le rendement de conversion est supérieur à 70%.

6. Luminophore selon l'une des revendications 1 à 5, **caractérisé en ce qu'**il contient en outre au moins un élément dopant destiné à renforcer ses propriétés de luminescence.

7. Luminophore selon la revendication 6, **caractérisé en ce que** ledit élément dopant est choisi, seul ou en mélange, parmi les alcalins, le thorium et le bore.

8. Un phosphate mixte de lanthane, cérium et terbium, précurseur de luminophores verts, ayant pour formule générale :

$$La_x Ce_y Tb_{(1-x-y)} PO4, z H_2O$$

dans laquelle x est inclusivement compris entre 0,4 et 0,6, x+y est supérieur à 0,8 et z est inclusivement compris entre 0 et 2, **caractérisé en ce que** les particules le constituant présentent une taille moyenne comprise entre 1 et 15 microns avec un indice de dispersion inférieur à 0,5 (granulométrie laser type Cilas) et **en ce qu'**il présente, après calcination à une température comprise entre 700°C et 900°C sous air, une clarté L* supérieure à 98% et des coordonnées de couleur a* et b* comprises entre - 0,5 et + 0,5, cette clarté et ces coordonnées étant mesurées selon la norme AFNOR X08-012.

9. Phosphate mixte de lanthane, cérium et terbium, précurseur de luminophores verts, ayant pour formule générale :

$$La_x Ce_y Tb_{(1-x-y)} PO4 , z H_2O$$

dans laquelle x est inclusivement compris entre 0,4 et 0,6, x+y est supérieur à 0,8 et z est inclusivement compris entre 0 et 2, **caractérisé en ce que** les particules le constituant présentent une taille moyenne comprise entre 1 et 15 microns avec un indice de dispersion inférieur à 0,5 (granulométrie laser type Cilas) et **en ce qu'**après calcination à une température comprise entre 700°C et 900°C sous air, il présente, par analyse de surface X.P.S., deux doublets dans la gamme d'énergie correspondant aux électrons 3 d du cérium et une absence de satellite situé à 32,7 eV du premier pic.

10. Phosphate selon la revendication 8 ou 9, **caractérisé en ce que** ladite taille moyenne est comprise entre 2 et 6 microns.

11. Phosphate selon l'une des revendications 8 à 10, **caractérisé en ce que** l'indice de dispersion est inférieur à 0,4.

12. Phosphate selon l'une des revendications 8 à 11, **caractérisé en ce qu'**il est à l'état anhydre.

13. Phosphate selon l'une des revendications 8 à 12, **caractérisé en ce qu'**il présente une structure cristalline de type hexagonale.

14. Phosphate selon l'une des revendications 8 à 13, **caractérisé en ce qu'**il présente une structure cristalline de type monoclinique.

15. Phosphate selon l'une des revendications 8 à 14, **caractérisé en ce qu'**il contient moins de 5% en poids, de préférence moins de 2% en poids, d'ions ammonium.

16. Phosphate selon l'une des revendications 8 à 15, **caractérisé en ce que** ladite clarté L* est comprise entre 99 et 99,99%.

**17.** Phosphate selon l'une des revendications 8 à 16, **caractérisé en ce que** lesdites coordonnées de couleur a* et b* sont comprises entre -0,25 et +0,5.

**18.** Phosphate selon l'une des revendications 8 à 17, **caractérisé en ce qu'**il contient en outre au moins un élément dopant destiné à renforcer les propriétés de luminescence d'un luminophore vert préparé à partir de ce dernier.

**19.** Procédé de synthèse d'un phosphate mixte de lanthane, cérium et terbium tel que ci-dessus défini, **caractérisé en ce qu'**il consiste à introduire, en continu et sous agitation, une première solution de sels solubles de lanthane, cérium et terbium, dans une seconde solution contenant des ions phosphates et présentant un pH initial inférieur à 2, à contrôler au cours de la précipitation le pH du milieu de précipitation à une valeur sensiblement constante et inférieure à 2, puis à récupérer le précipité ainsi obtenu et enfin, éventuellement, à le traiter thermiquement.

**20.** Procédé selon la revendication 19, caractérisé en ce ledit pH initial est compris entre 1 et 2.

**21.** Procédé selon l'une des revendications 19 à 20, **caractérisé en ce que** ledit pH de précipitation est maintenu constant à une valeur comprise entre 1 et 2.

**22.** Procédé selon l'une des revendications 19 à 21, **caractérisé en ce que** ledit pH constant de précipitation est égal audit pH initial.

**23.** Procédé selon l'une des revendications 19 à 22, **caractérisé en ce que** le contrôle du pH du milieu de précipitation est réalisé par addition d'un composé basique.

**24.** Procédé selon la revendication 23, **caractérisé en ce que** ledit composé basique est l'hydroxyde d'ammonium.

**25.** Procédé selon l'une des revendications 19 à 24, **caractérisé en ce que** lesdits ions phosphates sont sous forme d'une solution de phosphates d'ammonium.

**26.** Procédé selon la revendication 25, **caractérisé en ce que** lesdits phosphates d'ammonium sont choisis parmi le phosphate monoammonique et le phosphate diammonique.

**27.** Procédé selon l'une des revendications 19 à 24, **caractérisé en ce que** lesdits ions phosphates sont sous forme d'une solution d'acide phosphorique.

**28.** Procédé selon l'une des revendications 19 à 27, **caractérisé en ce que** la concentration totale en terres rares dans ladite première solution est comprise entre 0,25 mole/litre et 3 mole/litre.

**29.** Procédé selon l'une des revendications 19 à 28, **caractérisé en ce que** lesdits sels solubles de terres rares sont choisis, seuls ou en mélanges, parmi les nitrates, les chlorures, les acétates et les carboxylates.

**30.** Procédé selon la revendication 29, **caractérisé en ce que** l'on utilise des nitrates.

**31.** Procédé selon l'une des revendications 19 à 30, **caractérisé en ce que** ladite première solution de sels solubles de terres rares contient en outre au moins un sel soluble d'un autre élément dans le but d'obtenir un phosphate mixte de lanthane, cérium et terbium dopé par cet élément.

**32.** Procédé selon l'une des revendications 19 à 31, **caractérisé en ce que** ledit traitement thermique est opéré à une température inférieure à environ 1000°C.

**33.** Procédé selon la revendication 32, **caractérisé en ce que** ledit traitement thermique est conduit sous air.

**34.** Un phosphate mixte de lanthane, cérium et terbium, tel qu'obtenu selon le procédé de l'une quelconque des revendications 19 à 33.

**35.** Procédé de préparation d'un luminophore vert à base de phosphate mixte de lanthane, cérium et terbium selon l'une des revendications 1 à 7, **caractérisé en ce qu'**il consiste à traiter thermiquement, en présence d'un flux et sous atmosphère réductrice, à une température supérieure à environ 1000°C, un phosphate mixte de lanthane, cérium et terbium tel que défini à l'une quelconque des revendications 8 à 18, et 34.

**36.** Procédé de préparation d'un luminophore vert à base de phosphate mixte de lanthane, cérium et terbium, **caractérisé en ce qu'**il consiste à traiter thermiquement, sans flux, sous une atmosphère réductrice ou non réductrice, en particulier oxydante, à une température supérieure à environ 1000°C, un phosphate mixte de lanthane, cérium et terbium tel que défini à l'une quelconque des revendications 8 à 18, et 34.

**37.** Utilisation d'un luminophore vert tel que défini à l'une quelconque des revendications 1 à 7 ou tel qu'obtenu par le procédé selon la revendication 36, pour la fabrication des lampes.

**38.** Lampes obtenues à partir d'un luminophore vert tel que défini à l'une quelconque des revendications 1 à 7 ou tel qu'obtenu par le procédé selon la revendication 36.

**Patentansprüche**

**1.** Grüner Luminophor auf Basis eines gemischten Phosphats von Lanthan, Cer und Terbium der allgemeinen Formel

$$La_xCe_yTb_{(1-x-y)}PO_4$$

in der x Werte zwischen 0,4 und 0,6 einschließlich umfaßt und x + y größer als 0,8 ist, **dadurch gekennzeichnet, daß** die Partikel, aus denen der Luminophor besteht, eine mittlere Teilchengröße von 1 bis 15 µm mit einem Dispersionsindex kleiner als 0,5 (Cilas-Lasergranulometrie) aufweisen und jeweils aus einem einfachen Einkristall in polyedrischer Form bestehen.

**2.** Luminophor nach Anspruch 1, **dadurch gekennzeichnet, daß** die mittlere Teilchengröße 2 bis 6 µm beträgt.

**3.** Luminophor nach Anspruch 1 oder 2, **dadurch gekennzeichnet, daß** der Dispersionsindex kleiner als 0,4 ist.

**4.** Luminophor nach einem der Anspruche 1 bis 3, **dadurch gekennzeichnet, daß** er einen photoelektrischen Wirkungsgrad von mehr als 50 % aufweist.

**5.** Luminophor nach Anspruch 4, **dadurch gekennzeichnet, daß** der photoelektrische Wirkungsgrad mehr als 70 % beträgt.

**6.** Luminophor nach einem der Ansprüche 1 bis 5, **dadurch gekennzeichnet, daß** er außerdem mindestens mit einem Element dotiert ist, das seine Lumineszenzeigenschaften verstärken soll.

**7.** Luminophor nach Anspruch 6, **dadurch gekennzeichnet, daß** das Dotierelement ausgewählt ist, einzeln oder in Mischung, aus Alkalimetallen, Thorium und Bor.

**8.** Gemischtes Phosphat von Lanthan, Cer und Terbium, als Vorläufer der grünen Luminophore, mit der allgemeinen Formel

$$La_xCe_yTb_{(1-x-y)}PO_4 \cdot z\,H_2O$$

in der x Werte zwischen 0,4 und 0,6 einschließlich umfaßt, x + y größer als 0,8 ist und z Werte zwischen 0 und 2 einschließlich umfaßt, **dadurch gekennzeichnet, daß** die Partikel, aus denen das Phosphat besteht, eine mittlere Teilchengröße von 1 bis 15 µm mit einem Dispersionsindex unterhalb von 0,5 (Cilas-Lasergranulometrie) aufweisen und daß das Phosphat nach Calcinierung unter Luft bei Temperaturen von 700 bis 900 °C eine Helligkeit L* größer als 98 % und Farbwerte a* und b* von -0,5 bis +0,5 aufweist, wobei diese Helligkeit und diese Farbwerte nach der AFNOR X 08-12 gemessen sind.

**9.** Gemischtes Phosphat von Lanthan, Cer und Terbium, als Vorläufer der grünen Luminophore, mit der allgemeinen Formel

$$La_xCe_yTb_{(1-x-y)}PO_4 \cdot z\,H_2O$$

in der x Werte zwischen 0,4 und 0,6 einschließlich umfaßt, x + y größer als 0,8 ist und z Werte zwischen 0 und 2 einschließlich aufweist, **dadurch gekennzeichnet, daß** die Partikel, aus denen das Phosphat besteht, eine mittlere Teilchengröße von 1 bis 15 µm mit einem Dispersionsindex unterhalb von 0,5 (Cilas-Lasergranulometrie) aufweisen und daß das Phosphat nach Calcinierung unter Luft bei Temperaturen von 700 bis 900 °C in der röntgenphotoelektronenspektroskopischen Oberflächenanalyse zwei Dubletts auf der Energieskala aufweist, welche den 3d-Elektronen des Cers entsprechen, wobei der bei 32,7 eV gelegene Satellit des ersten Peaks fehlt.

**10.** Phosphat nach Anspruch 8 oder 9, **dadurch gekennzeichnet, daß** die mittlere Teilchengröße zwischen 2 und 6 µm beträgt.

**11.** Phosphat nach einem der Ansprüche 8 bis 10, **dadurch gekennzeichnet, daß** der Dispersionsindex kleiner als 0,4 ist.

**12.** Phosphat nach einem der Ansprüche 8 bis 11, **dadurch gekennzeichnet, daß** es wasserfrei vorliegt.

**13.** Phosphat nach einem der Ansprüche 8 bis 12, **dadurch gekennzeichnet, daß** es eine hexagonale Kristallstruktur aufweist.

**14.** Phosphat nach einem der Ansprüche 8 bis 13, **dadurch gekennzeichnet, daß** es eine monokline Kristallstruktur aufweist.

15. Phosphat nach einem der Ansprüche 8 bis 14, **dadurch gekennzeichnet, daß** es weniger als 5 Gew.-%, vorzugsweise weniger als 2 Gew.-%, Ammoniumionen enthält.

16. Phosphat nach einem der Ansprüche 8 bis 15, **dadurch gekennzeichnet, daß** die Helligkeit L* 99 bis 99,99 % beträgt.

17. Phosphat nach einem der Ansprüche 8 bis 16, **dadurch gekennzeichnet, daß** die Farbwerte a* und b* -0,25 bis +0,5 betragen.

18. Phosphat nach einem der Ansprüche 8 bis 17, **dadurch gekennzeichnet, daß** es außerdem mit mindestens einem Element dotiert ist, das die Lumineszenzeigenschaften eines grünen Luminophors, der ausgehend von diesem Phosphat hergestellt wird, verstärken soll.

19. Verfahren zur Herstellung eines gemischten Phosphats von Lanthan, Cer und Terbium, wie zuvor definiert, **dadurch gekennzeichnet, daß** man kontinuierlich und unter Rühren eine erste Lösung löslicher Lanthan-, Cer- und Terbiumsalze in eine zweite Lösung einbringt, die Phosphationen enthält und einen anfänglichen pH-Wert kleiner als 2 aufweist, und daß man im Verlauf der Fällung den pH-Wert des Fällungsmilieus auf einen ungefähr konstanten pH-Wert kleiner als 2 einstellt, man dann den so erhaltenen Niederschlag abtrennt und man schließlich gegebenenfalls diesen Niederschlag thermisch behandelt.

20. Verfahren nach Anspruch 19, **dadurch gekennzeichnet, daß** der anfängliche pH-Wert zwischen 1 und 2 liegt.

21. Verfahren nach Anspruch 19 oder 20, **dadurch gekennzeichnet, daß** der Fällungs-pH-Wert bei einem Wert zwischen 1 und 2 konstantgehalten wird.

22. Verfahren nach einem der Ansprüche 19 bis 21, **dadurch gekennzeichnet, daß** der konstante Fällungs-pH-Wert gleich dem Anfangs-pH-Wert ist.

23. Verfahren nach einem der Ansprüche 19 bis 22, **dadurch gekennzeichnet, daß** die Einstellung des pH-Werts des Fällungsmilieus durch Zugabe einer basischen Verbindung erfolgt.

24. Verfahren nach Anspruch 23, **dadurch gekennzeichnet, daß** die basische Verbindung Ammoniumhydroxid ist.

25. Verfahren nach einem der Ansprüche 19 bis 24, **dadurch gekennzeichnet, daß** die Phosphationen in Form einer Ammoniumphosphatlösung vorliegen.

26. Verfahren nach Anspruch 25, **dadurch gekennzeichnet, daß** die Ammoniumphosphate ausgewählt werden aus Mono- und Diammoniumphosphaten.

27. Verfahren nach einem der Ansprüche 19 bis 24, **dadurch gekennzeichnet, daß** die Phosphationen in Form einer Phosphorsäurelösung vorliegen.

28. Verfahren nach einem der Ansprüche 19 bis 27, **dadurch gekennzeichnet, daß** die Gesamtkonzentration an Seltenen Erden in der ersten Lösung 0,25 mol/l bis 3 mol/l beträgt.

29. Verfahren nach einem der Ansprüche 19 bis 28, **dadurch gekennzeichnet, daß** die löslichen Salze der Seltenen Erden ausgewählt werden, einzeln oder in Mischungen, aus Nitraten, Chloriden, Acetaten und Carboxylaten.

30. Verfahren nach Anspruch 29, **dadurch gekennzeichnet, daß** man Nitrate verwendet.

31. Verfahren nach einem der Ansprüche 19 bis 30, **dadurch gekennzeichnet, daß** die erste Lösung der löslichen Salze der Seltenen Erden außerdem mindestens ein lösliches Salz eines anderen Elements enthält, mit dem Ziel, ein gemischtes Phosphat von Lanthan, Cer und Terbium zu erhalten, das mit diesem Element dotiert ist.

32. Verfahren nach einem der Ansprüche 19 bis 31, **dadurch gekennzeichnet, daß** die thermische Behandlung bei einer Temperatur unterhalb von etwa 1000 °C durchgeführt wird.

33. Verfahren nach Anspruch 32, **dadurch gekennzeichnet, daß** die thermische Behandlung unter Luft durchgeführt wird.

34. Gemischtes Phosphat von Lanthan, Cer und Terbium, erhalten nach dem Verfahren gemäß einem der Ansprüche 19 bis 33.

35. Verfahren zur Herstellung eines grünen Luminophors auf Basis eines gemischten Phosphats von Lanthan, Cer und Terbium nach einem der Ansprüche 1 bis 7, **dadurch gekennzeichnet, daß** man bei einer Temperatur oberhalb von etwa 1000 °C ein gemischtes Phosphat von Lanthan, Cer und Terbium, wie in einem der Ansprüche 8 bis 18 und 34 definiert, thermisch in Gegenwart eines Flußmittels und unter einer reduzierenden Atmosphäre behandelt.

36. Verfahren zur Herstellung eines grünen Luminophors auf Basis eines gemischten Phosphats von Lanthan, Cer und Terbium, **dadurch gekennzeich-**

**net, daß** man bei einer Temperatur oberhalb von etwa 1000 °C ein gemischtes Phosphat von Lanthan, Cer und Terbium, wie in einem der Ansprüche 8 bis 18 und 34 definiert, thermisch ohne Flußmittel unter einer reduzierenden oder nichtreduzierenden, insbesondere oxidierenden Atmosphäre behandelt.

37. Verwendung eines grünen Luminophors, wie in einem der Ansprüche 1 bis 7 definiert oder wie nach einem Verfahren nach Anspruch 36 erhalten, zur Herstellung von Lampen.

38. Lampen, erhalten ausgehend von einem grünen Luminophor, wie in einem der Ansprüche 1 bis 7 definiert oder wie durch ein Verfahren nach Anspruch 36 erhalten.

**Claims**

1. Green phosphor based on a mixed lanthanum cerium terbium phosphate of general formula:

$$La_xCe_yTb_{(1-x-y)}PO4$$

in which x lies between 0.4 and 0.6 inclusively and x+y is greater than 0.8, **characterized in that** the particles of which it is composed have an average size of between 1 and 15 microns with a scatter index less than 0.5 (Cilas-type laser particle size analyser) and each consisting of a single polyhedral single crystal.

2. Phosphor according to Claim 1, **characterized in that** the said average size is between 2 and 6 microns.

3. Phosphor according to one of Claims 1 to 2, **characterized in that** the scatter index is less than 0.4.

4. Phosphor according to one of Claims 1 to 3, **characterized in that** it has a conversion yield of greater than 50%.

5. Phosphor according to Claim 4, **characterized in that** the conversion yield is greater than 70%.

6. Phosphor according to one of Claims 1 to 5, **characterized in that** it furthermore contains at least one doping element intended to enhance its luminescence properties.

7. Phosphor according to Claim 6, **characterized in that** the said doping element is chosen, by itself or as a mixture, from the alkali metals, thorium and boron.

8. Mixed lanthanum cerium terbium phosphate, precursor for green phosphors, having as general formula:

$$La_xCe_yTb_{(1-x-y)}PO4.zH_2O$$

in which x lies between 0.4 and 0.6 inclusively, x+y is greater than 0.8 and z lies between 0 and 2 inclusively, **characterized in that** the particles of which it is composed have an average size of between 1 and 15 microns with a scatter index less than 0.5 (Cilas-type laser particle size analyser) and **in that** it has, after calcining at a temperature of between 700°C and 900°C in air, a lightness L* of greater than 98% and colour coordinates a* and b* of between -0.5 and +0.5, this lightness and these coordinates being measured according to the AFNOR X08-012 standard.

9. Mixed lanthanum cerium terbium phosphate, precursor for green phosphors, having as general formula:

$$La_xCe_yTb_{(1-x-y)}PO4.zH_2O$$

in which x lies between 0.4 and 0.6 inclusively, x+y is greater than 0.8 and z lies between 0 and 2 inclusively, **characterized in that** the particles of which it is composed have an average size of between 1 and 15 microns with a scatter index less than 0.5 (Cilas-type laser particle size analyser) and **in that**, after calcining at a temperature of between 700°C and 900°C in air, it has, by XPS surface analysis, two doublets in the energy range corresponding to the 3d electrons of cerium and an absence of a satellite located at 32.7 eV from the first peak.

10. Phosphate according to Claim 8 or 9, **characterized in that** the said average size is between 2 and 6 microns.

11. Phosphate according to one of Claims 8 to 10, **characterized in that** the scatter index is less than 0.4.

12. Phosphate according to one of Claims 8 to 11, **characterized in that** it is in the anhydrous state.

13. Phosphate according to one of Claims 8 to 12, **characterized in that** it has a crystal structure of hexagonal type.

14. Phosphate according to one of Claims 8 to 13, **characterized in that** it has a crystal structure of monoclinic type.

15. Phosphate according to one of Claims 8 to 14, **char-**

**acterized in that** it contains less than 5% by weight, preferably less than 2% by weight, of ammonium ions.

16. Phosphate according to one of Claims 8 to 15, **characterized in that** the said lightness L* is between 99 and 99.99%.

17. Phosphate according to one of Claims 8 to 16, **characterized in that** the said colour coordinates a* and b* are between -0.25 and +0.5.

18. Phosphate according to one of Claims 8 to 17, **characterized in that** it furthermore contains at least one doping element intended to enhance the luminescence properties of a green phosphor prepared from the latter.

19. Method of synthesizing a mixed lanthanum cerium terbium phosphate as defined hereinabove, **characterized in that** it consists in introducing, continuously and with stirring, a first solution of soluble salts of lanthanum, cerium and terbium into a second solution containing phosphate ions and having an initial pH of less than 2, in controlling the pH of the precipitation medium during precipitation to a value which is substantially constant and less than 2, then in recovering the precipitate thus obtained and finally, possibly, in heat-treating it.

20. Method according to Claim 19, **characterized in that** the said initial pH is between 1 and 2.

21. Method according to one of Claims 19 to 20, **characterized in that** the said precipitation pH is held constant at a value of between 1 and 2.

22. Method according to one of Claims 19 to 21, **characterized in that** the said constant precipitation pH is equal to the said initial pH.

23. Method according to one of Claims 19 to 22, **characterized in that** the pH of the precipitation medium is controlled by adding a basic compound.

24. Method according to Claim 23, **characterized in that** the said basic compound is ammonium hydroxide.

25. Method according to one of Claims 19 to 24, **characterized in that** the said phosphate ions are in the form of a solution of ammonium phosphates.

26. Method according to Claim 25, **characterized in that** the said ammonium phosphates are chosen from monoammonium phosphate and diammonium phosphate.

27. Method according to one of Claims 19 to 24, **characterized in that** the said phosphate ions are in the form of a solution of phosphoric acid.

28. Method according to one of Claims 19 to 27, **characterized in that** the total concentration of rare earths in the said first solution is between 0.25 mol/litre and 3 mol/litre.

29. Method according to one of Claims 19 to 28, **characterized in that** the said soluble rare-earth salts are chosen, by themselves or as mixtures, from nitrates, chlorides, acetates and carboxylates.

30. Method according to Claim 29, **characterized in that** nitrates are used.

31. Method according to one of Claims 19 to 30, **characterized in that** the said first solution of soluble rare-earth salts furthermore contains at least one soluble salt of another element for the purpose of obtaining a mixed lanthanum cerium terbium phosphate, doped with this element.

32. Method according to one of Claims 19 to 31, **characterized in that** the said heat treatment is performed at a temperature less than approximately 1000°C.

33. Method according to Claim 32, **characterized in that** the said heat treatment is conducted in air.

34. Mixed lanthanum cerium terbium phosphate, as obtained according to the method of any one of Claims 19 to 33.

35. Method of preparing a green phosphor based on a mixed lanthanum cerium terbium phosphate, according to one of Claims 1 to 7, **characterized in that** it consists in heat-treating in the presence of a flux and under a reducing atmosphere, at a temperature greater than approximately 1000°C, a mixed lanthanum cerium terbium phosphate as defined in any one of Claims 8 to 18, and 34.

36. Method of preparing a green phosphor based on a mixed lanthanum cerium terbium phosphate, **characterized in that** it consists in heat-treating without a flux, under a reducing or non-reducing, in particular oxidizing, atmosphere, at a temperature greater than approximately 1000°C, a mixed lanthanum cerium terbium phosphate as defined in any one of Claims 8 to 18, and 34.

37. Use of a green phosphor, as defined in any one of Claims 1 to 7 or as obtained by the method according to Claim 36, for the manufacture of lamps.

**38.** Lamps obtained from a green phosphor as defined in any one of Claims 1 to 7 or as obtained by the method according to Claim 36.